# EUROPÄISCHE PATENTSCHRIFT

(11) **EP 1 647 174 B1**
(45) Veröffentlichungstag und Bekanntmachung des Hinweises auf die Patenterteilung: **23.01.2008**
(21) Anmeldenummer: 05109481.1
(22) Anmeldetag: 12.10.2005
(51) Int. Cl.: A01C 7/06, A01C 7/20, A01B 63/32

(54) **Landwirtschaftliches Gerät**
Agricultural machine
Appareil agricole

(30) Priorität: 18.10.2004 US 967502
(43) Veröffentlichungstag der Anmeldung: 19.04.2006
(73) Patentinhaber: DEERE & COMPANY, Moline, Illinois 61265-8098 (US)
(72) Erfinder: Hoehn, Kevin William, Johnston, IA Iowa 50131 (US)
(74) Vertreter: Holst, Sönke

(56) Entgegenhaltungen:
- DE-A1- 10 245 315
- US-A1- 2003 164 125

## Beschreibung

Die Erfindung betrifft ein landwirtschaftliches Gerät mit einem Rahmen, einem sich in Querrichtung erstreckenden und mit einem vorderen Bereich des Rahmens verbundenen Träger, mehreren entlang des Trägers beabstandet angeordneten Furchenöffnern für Dünger zum Ausbringen von Material in den Boden, wobei der Träger schwenkbar mit dem Rahmen verbunden ist und Mittel zum Verschwenken des Trägers vorgesehen sind, um die Arbeitstiefe der Furchenöffner für Dünger zu verändern, mehreren am Rahmen rückwärtig zu den Furchenöffnern für Dünger beabstandet montierten Furchenöffnern für Saatgut, um hinter den Furchenöffnern für Dünger in den Boden einzugreifen, einer Hebevorrichtung zum Heben und Senken des Rahmens relativ zum Boden, um die Arbeitstiefe der Furchenöffner für Saatgut zu verändern.

Bei landwirtschaftlichen Sävorgängen, ist es hilfreich, dass der Dünger von dem Saatgut kontrolliert getrennt in den Boden eingebracht wird, um eine Beschädigung von jungen Pflanzen durch hohe Düngerkonzentrationen zu vermeiden. Es sind Maschinen erhältlich, mit einer Maschinenkonfiguration, die getrennte Furchenöffner für Dünger und Saatgut aufweist. Bei vielen dieser Konfigurationen mit getrennten Furchenöffnern ist eine geringere Anzahl von Furchenöffnern für Dünger vorgesehen. Üblicherweise ist ein Furchenöffner für Dünger je zwei Furchenöffner für Saatgut vorgesehen, wobei der Ausbringpunkt für den Dünger ungefähr in einem gleichen Abstand zu den beiden Ausbringpunkten für das Saatgut zwischen ihnen angeordnet ist. Ein Beispiel für eine derartige Maschine ist die Sämaschine "Air Drill 1895" der Marke John Deere, welche zwei Reihen von scheibenförmigen, an einem Schwenkträger montierten Saatgut-Furchenöffnern kombiniert mit einer Reihe von scheibenförmigen, an einem Schwenkträger montierten Dünger-Furchenöffnern aufweist. Ein weiteres Beispiel stellt die Sämaschine "Air Hoe Drill 5710" der Marke Bourgault dar, welche an einem Rahmen montierte scharartige Saatgut-Furchenöffner und an einem Rahmen montierte scheibenförmige Dünger-Furchenöffner aufweist. Scheibenförmige Furchenöffner sind relativ komplex und kostenintensiv gegenüber den scharartigen Furchenöffnern. Allerdings weisen Scheiben einen geringeren Zugwiderstand und einen höheren Furchenrückstand auf. Die Steuerung der Einbringtiefe von Dünger an rahmenmontierten Dünger-Furchenöffnern kann sich als schwer und zeitintensiv gestalten.

An Geräten, an denen die Arbeitstiefe eines scharartigen Furchenöffners durch die Rahmenposition des Gerätes eingestellt wird, erfordern Änderungen der Düngerplatzierung relativ zu der Saatgutplatzierung eine Einstellung der Position der scheibenförmigen Dünger-Furchenöffner relativ zum Rahmen. Änderungen der Position der scheibenförmigen Furchenöffner relativ zum Rahmen sind ebenfalls erforderlich um die scheibenförmigen Furchenöffner über die Bodenoberfläche anzuheben, wenn nur die scharartigen Furchenöffner in Gebrauch sind. An einem Schwenkträger montierte (scheibenförmige) Furchenöffner weisen üblicherweise einen begrenzten Bereich einer bevorzugten Rotationsposition auf, die sich aufgrund eines begrenzt akzeptablen Bereichs eines Eingriffswinkels zwischen der Ausbringeinrichtung und der Bodenoberfläche ergibt.

Eine weitere derartige Maschine ist in der US 2003/164125 A1 offenbart. Sie beschreibt eine Pflanzmaschine mit einer hydraulischen Überlastsicherung für die an einem schwenkbaren Werkzeugträger angeordneten Pflanz- und Düngeeinheiten. Bei Auftreffen einer Pflanz- und Düngeeinheiten auf ein Hindernis während eines Bestellvorgangs wird ein Schutzmechanismus ausgelöst, der ein Verschwenken der Pflanz- und Düngeeinheiten bzw. des Werkzeugträgers bewirkt, so dass das Hindernis überfahren werden kann. Hierbei ist durch den Schwenkmechanismus für den Werkzeugträger eine konstruktionsbedingte Tiefeneinstellung der Pflanz- und Düngeeinheiten vorgesehen, die jedoch auf den durch den Schwenkwinkel des Werkzeugträgers beschränkten Bereich begrenzt ist.

Die der Erfindung zugrunde liegende Aufgabe wird darin gesehen, ein landwirtschaftliches Gerät der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein landwirtschaftliches Gerät der eingangs genannten Art derart ausgebildet, dass eine Lagerhalterung und ein Lagerblock zur schwenkbaren Montierung des Schwenkträgers an den Rahmen vorgesehen sind, wobei der Lagerblock mit der Lagerhalterung verbunden und die Lagerhalterung vertikal einstellbar ist, um eine auswählbare Montierung der Schwenkwelle an einer von mehreren vertikal beabstandeten Positionen und damit eine Veränderung des Arbeitstiefenbereichs der Furchenöffner für Dünger zu ermöglichen.

Das Gerät umfasst einen vorderen Bereich mit scheibenförmigen Furchenöffnern für Dünger und einen hinteren Bereich mit an einem Rahmen montierten Werkzeugen, wie z. B. Säschare (bzw. scharartige Furchenöffner für Saatgut). Die (scheibenförmigen) Furchenöffner sind über Schwenkarme mit einem schwenkbaren Träger verbunden, welcher vertikal verstellbar ist, um an verschiedene Arbeitstiefenbereiche der rahmenmontierten Werkzeuge anpassbar zu sein. Das Gerät kombiniert einen geringeren Zugwiderstand, einen besseren Furcheneinschnitt und einen höheren Furchenrückstand der scheibenförmigen Furchenöffner mit geringeren Kosten, geringerer Komplexität und vielfältigerer Bodeneingriffsmöglichkeit der Säschare. Des Weiteren kann eine Justierung der Arbeitstiefe der Säschare durch Verstellung der Rahmenhöhe auf einfache Weise und schnell erfolgen, da die Eingriffstiefe der Schare durch die Rahmenhöhe vorgegeben ist. Die vertikale Justierbarkeit der Schwenkträgeranordnung ermöglicht einen weiten Einstellbereich der Rahmenarbeitshöhe für unterschiedliche Eingriffstiefen der Werkzeuge bei optimalen Anstellwinkeln der Schwenkarme der scheibenförmigen Furchenöffner.

Das Gerät weist verschiedene Gruppen von Werkzeugen auf und stellt ein kombiniertes Dünge- und Sägerät dar, mit scheibenförmigen Furchenöffnern für Dünger und rahmenmontierten Saatwerkzeugen, wobei ein schwenkbar am vorderen Bereich des Rahmens montierter Träger die Furchenöffner für Dünger trägt.

Der schwenkbare Träger ist ferner derart angeordnet, dass er relativ zum Rahmen vertikal verschiebbar ist, um an verschiedene Bereiche für Rahmenarbeitshöhen angepasst werden zu können.

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Vorderansicht eines Teils eines landwirtschaftlichen Gerätes mit vorderseitig an einem Schwenkträger montierten scheibenförmigen Furchenöffnern und hinterseitig an einem Rahmen montierten Werkzeugen,
- Fig. 2: eine vergrößerte Seitenansicht des Geräts aus Figur 1,
- Fig. 3: eine perspektivische Hinteransicht eines vorderen Bereichs des Geräts aus Figur 1 zur Darstellung einer justierbaren Schwenkträgerkonstruktion und
- Fig. 4: eine perspektivische Vorderansicht der Schwenkträgerkonstruktion aus Figur 3.

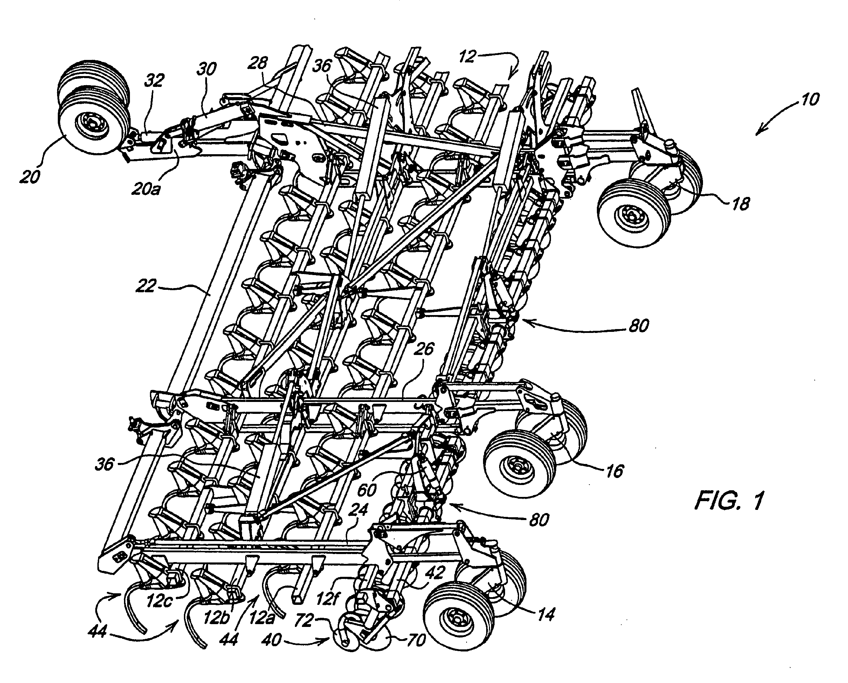

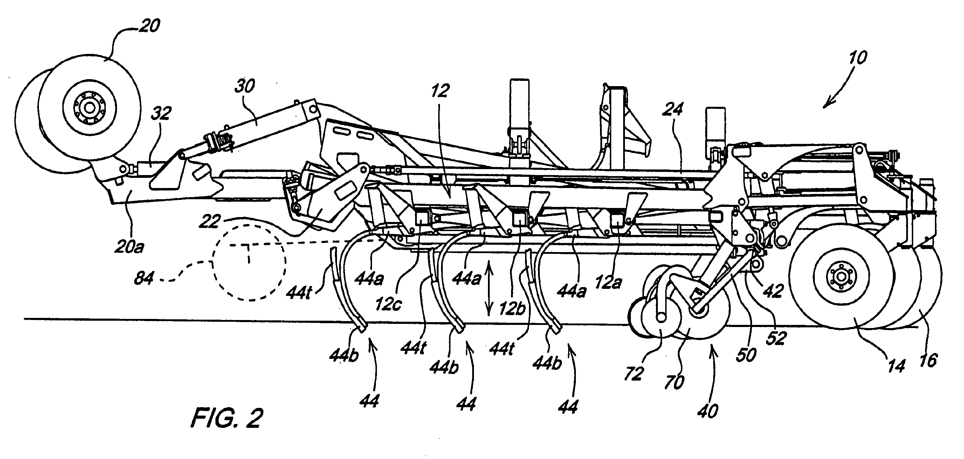

Die Figuren 1 und 2 zeigen einen Teil eines mehrere Sektionen aufweisenden Gerätes 10 mit einem Rahmen 12, welcher zur Vorwärtsbewegung über ein Feld durch vertikal einstellbare vordere Radanordnungen 14, 16, 18 getragen wird. Hintere Radanordnungen 20, welche in einer eingefahrenen Feldarbeitsposition hoch geschwenkt dargestellt sind, sind mit einem hinteren beweglichen Schwenkträger 22 verbunden, der einen Teil des Rahmens 12 formt und sind relativ zum Rahmen 12 in Abwärtsrichtung schwenkbar, um den hinteren Teil des Gerätes beim Transport abzustützen. Zwischen dem Schwenkträger 22 und den Radanordnungen 14, 16, 18 sind Hubstangen 24, 26, 28 angeordnet. Zwischen den Radanordnungen 20 und dem Rahmen 12 sind Hubzylinder 30 angeordnet, die den Schwenkträger 22 verschwenken, um die Radanordnungen 14, 16, 18, 20 relativ zum Rahmen 12 anzuheben bzw. abzusenken. Für die hinteren Radanordnungen 20 sind Positionierzylinder 32 vorgesehen, die zwischen Radstützen 20a und Radanordnungen 20 angeordnet sind, um die Radanordnungen 20 entweder aufwärts zu schwenken (wie dargestellt), um Bodenfreiheit in der Arbeitsstellung zu ermöglichen, oder um die Radanordnungen 20 abzusenken, um bei Transport eine Abstützung des hinteren Teils des Rahmens 12 zu erzielen. Die Positionierzylinder 32 für die hinteren Radanordnungen 20 sind wechselwirksam mit Faltzylindern 36, welche den Rahmen 12 des Gerätes 10 zusammenfalten, kombiniert. Wenn die Faltzylinder 36 eingefahren werden, um die Sektionen des Rahmens 12 für den Transport zusammenzufalten, fahren die Positionierzylinder 32 aus, um die Radanordnungen 20 abwärts zu schwenken. Wenn die Sektionen des Rahmens 12 für Feldarbeiten durch Ausfahren der Faltzylinder 36 auseinandergefaltet werden, werden die Positionierzylinder 32 eingefahren, um die Radanordnungen 20 aufwärts zu schwenken. Auf dem Feld können die vorderen Radanordnung 14, 16, 18 relativ zum Rahmen 12 vertikal verstellt werden, um die Höhe des Rahmens 12 relativ zum Boden zu verändern und die Pflanztiefe einzustellen, wie im Folgenden detailliert beschrieben wird.

Das Gerät 10 stellt eine Kombination aus Sä- und Düngegerät dar mit einem Satz von vorderen Furchenöffnern 40 für Dünger, die mit einem vorderen beweglichen Schwenkträger 42 verbunden sind, und hinteren am Rahmen 12 montierten hackenartigen (scharförmigen) Furchenöffnern 44 für Saatgut. Wenn der Rahmen 12 während Feldarbeiten angehoben bzw. abgesenkt wird, dann wird die Arbeitstiefe der Furchenöffner 44 für das Saatgut eingestellt. Die vorderen Furchenöffner 40 für Dünger sind als scheibenförmige Furchenöffner mit Schwenkarmen 50 dargestellt, wobei die Schwenkarme 50 vordere obere Enden aufweisen, die mit unteren Bereichen von an den Schwenkträger 42 befestigten Halterungen 52 für Schwenkarme 50 verbunden sind. Eine Feder- und Spannvorrichtung 54 ist zwischen oberen Bereichen der Halterungen 52 und hinteren unteren Enden der Schwenkarme 50 angeordnet, um die Schwenkarmanordnung während der Feldarbeitsstellung in Abwärtsrichtung vorzuspannen und um die Furchenöffner 40 für den Dünger vom Boden anzuheben, wenn der Schwenkträger 42 im Uhrzeigersinn verschwenkt wird, wie in den Figuren zu sehen ist. Ein Motor oder ein Zylinder 60 für den Schwenkträger 42, der ein stangenseitiges Ende, welches mit einer Schwenkträgerhalterung 62, und ein kolbenseitiges Ende aufweist, welches mit einer Rahmenhalterung 64 verbunden ist, verschwenkt den Schwenkträger 42, um die Furchenöffner 40 für den Dünger anzuheben bzw. abzusenken und um den Anpressdruck auf die Furchenöffner 40 in der Feldarbeitsstellung einzustellen. Angewinkelte Furchenöffnerscheiben 70 und Tiefeneinstellräder 72 sind an den hinteren unteren Enden der Schwenkarme 50 montiert. Über Ausbringeinrichtungen 74 für Dünger, die rückwärtig zu den Furchenöffnerscheiben 70 angeordnet sind, wird Dünger in die von den Furchenöffnerscheiben 70 gebildeten Furchen ausgebracht. Nachlaufende Schließräder 76, die durch umgekehrte (nach unten weisende), u-förmige, am hinteren Ende der Schwenkarme 50 angeordnete Halterungen 78 gehalten werden, verschließen die Furche und festigen den Boden über dem abgelegten Material.

Der Rahmen 12 weist Querstreben oder Träger 12a, 12b, 12c auf, die rückwärtig zu einem vorderen Rahmenteil 12f beabstandet angeordnet sind. Der vordere Rahmenteil 12f trägt eine einstellbare Halterungskonstruktion 80 für den Schwenkträger 42, mit der der Schwenkträger 42 auswählbar in einer von mehreren vertikal beabstandeten Positionen in Abhängigkeit von der Arbeitshöhe des Rahmens 12 montierbar ist, um den Anstellwinkel des Schwenkarms 50 des Furchenöffners in einem geeigneten Bereich zu halten. Die hinteren Träger 12a, 12b, 12c tragen in Querrichtung beabstandete Scharanordnungen 44a mit c-förmig ausgebildeten Scharen, welche untere Enden mit hackenförmigen oder anderen geeigneten Furchenöffnern 44b aufweisen. Saatgutleitungen 44t, welche mit einer Saatgutquelle (nicht gezeigt) verbunden sind, leiten Saatgut in die durch die Furchenöffner 44b für Saatgut gebildeten Furchen. Gruppen von nachgeführten Anpressrädern 84 (Figur 2) verschließen die Furche und festigen den Boden über den Saatgutfurchen. Die Furchenöffner 40 für Dünger sind üblicherweise derart auf dem Schwenkträger 42 beabstandet angeordnet, dass der Ausbringpunkt für Dünger mittig zwischen zwei nebeneinander liegenden Saatgutreihen liegt. Die Eindringtiefe der Furchenöffner 44b für das Saatgut wird durch die Höhe des Rahmens 12 über der Bodenoberfläche bestimmt, und durch Verstellen der Radanordnungen 14, 16, 18 kann die Pflanztiefe des gesamten Geräts 10 auf einfache Weise verändert werden. Die einstellbare Halterungskonstruktion 80 für die Schwenkträger 42 ermöglicht eine vertikale Einstellung des Schwenkträgers 42 relativ zum Rahmen 12, so dass der Arbeitsbereich der Anstellwinkel der Schwenkarme 50 optimiert wird. Beispielsweise kann für Arbeiten mit relativ tiefen Saatguttiefen der Schwenkträger 42 relativ zum Rahmen 12 angehoben werden, so dass der Anstellwinkel der Schwenkarme 50 eine minimale gewünschte Grenze nicht unterschreitet. Andersherum kann der Schwenkträger 42, bei Arbeiten mit seichteren Saatguttiefen, bei denen sich der Rahmen 12 in einer relativ hohen Position befindet, abgesenkt werden, um die Schwenkarme 50 in dem gewünschten Anstellwinkelbereich zu betreiben.

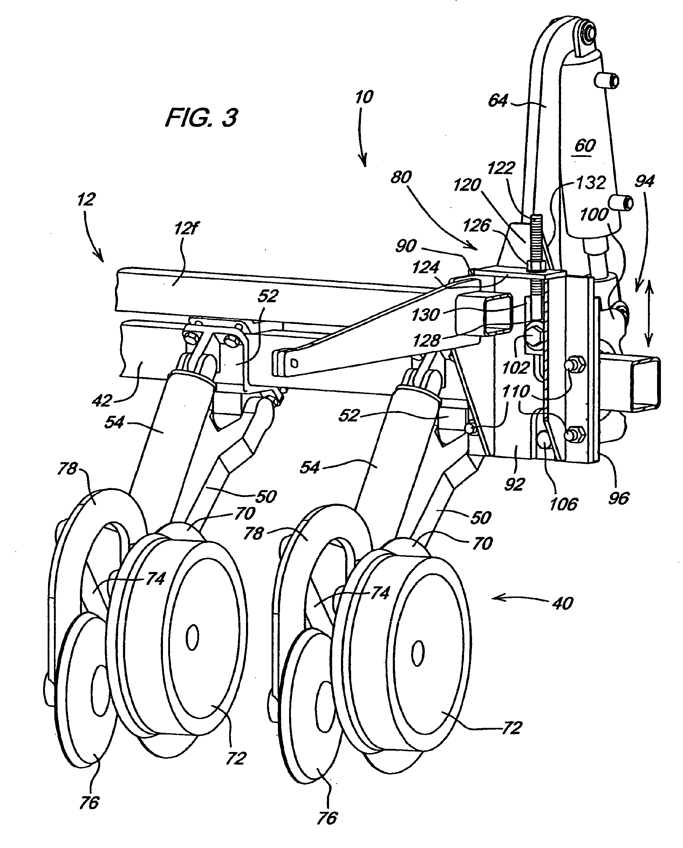

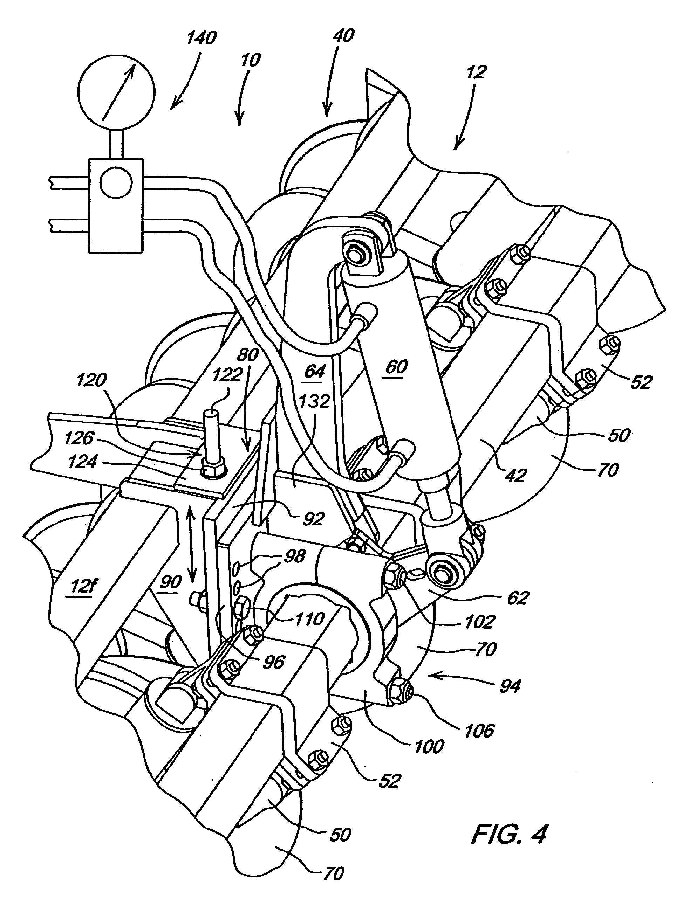

Wie am besten in den Figuren 3 und 4 zu erkennen ist, umfasst jede Halterungskonstruktion 80 für den Schwenkträger 42 eine Rahmenhalterung 90, die von dem vorderen Rahmenteil 12f getragen wird und eine nach vorn gerichtete, geschlitzte Wand 92 aufweist. Eine Lagerhalterung 94 für einen Lagerblock 100 umfasst eine hintere Platte 96 mit vertikal beabstandeten Öffnungen 98 (Figur 4), die an die geschlitzte Wand 92 angrenzen. Der geteilte Lagerblock 100, welcher den Schwenkträger 42 schwenkbar lagert, ist auf der Rückseite der geschlitzten Wand 92 und an der Platte 96 durch Bolzen 102, 106 befestigt. Bolzen 110 führen durch einen ausgewählten Satz der Öffnungen 98 und durch Öffnungen in der Wand 92, die mit den Öffnungen 98 fluchten. Der Satz Öffnungen 98 wird ausgewählt, um den Schwenkträger 42 in einer gewünschten vertikalen Lage relativ zum Rahmen 12 zu positionieren. Die Platte 96 kann relativ zu der geschlitzten Wand 92 versetzt werden, um die vertikale Position des Schwenkträgers 42 zu verändern.

Um die vertikale Einstellung des Schwenkträgers 42 zu vereinfachen erstreckt sich eine einstellbare Halterungskonstruktion 120 zwischen der Rahmenhalterung 90 und der Lagerhalterung 94 für den Lagerblock 100. Wie dargestellt ist, umfasst die Halterungskonstruktion 120 ein mit einem Gewinde versehenes Ende 122, welches sich in Aufwärtsrichtung durch eine Öffnung in einem horizontal ausgerichteten Teil 124 der Rahmenhalterung 90 erstreckt. Eine auf das Ende 122 geschraubte Schraubenmutter 126 hält die Halterungskonstruktion 120 in der Öffnung der Rahmenhalterung 90 und ermöglicht eine vertikale Verstellung einer unteren Halteöse 128, welche das Ende des oberen Bolzens 102 des Lagerblocks 100 aufnimmt. Der Bolzen 102 führt ebenfalls durch eine Abstützplatte 130, die am Schlitz der geschlitzten Wand 92 aufliegt. Um die vertikale Position des Schwenkträgers 42 relativ zum Rahmen 12 zu verändern werden die Bolzen 110 entfernt und der Bolzen 102 des Lagerblocks 100 gelöst. Die Halterungskonstruktion 120 hält den Schwenkträger 42, wenn die Bolzen 110 aus den Öffnungen entfernt werden. Die Bedienperson kann dann die Schraubenmutter 126 verdrehen, um die Halteöse 128 nach oben oder unten zu verschieben, bis der Satz Öffnungen 98 in der Platte 96 mit den Öffnungen in der Wand 92 für die gewünschte Höheneinstellung ausgerichtet ist. Die Schlitze in der Wand 92 ermöglichen eine vertikale Verschiebung der Bolzen 102, 106 des Lagerblocks 100 und damit der Lagerhalterung 94 für den Lagerblock 100. Die Bolzen 110 werden dann durch die ausgerichteten Öffnungen geführt und festgezogen, so dass der Schwenkträger 42 in seiner Position relativ zum Rahmen befestigt wird. Die Halterungskonstruktion 120 hält somit den Schwenkträger 42 während eines Einstellvorgangs und hilft dabei die Öffnungen auszurichten, um das Einsetzen der Bolzen 110 zu vereinfachen.

Die Rahmenhalterung 64 für den Zylinder 60 des Schwenkträgers 42 ist über einen Konsolträger 132 neben dem Lagerblock 100 ebenfalls mit der Platte 96 verbunden. Dadurch wird automatisch eine geeignete Position des Zylinders 60 relativ zum Schwenkträger 42 beibehalten, wenn der Schwenkträger höhenverstellt wird. Der Zylinder 60 kann über ein herkömmliches hydraulisches System mit einem einstellbaren Druckregler 140 verbunden sein, um einen einstellbaren Anpressdruck für die vorlaufenden Furchenöffner 40 bereitzustellen.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Landwirtschaftliches Gerät mit einem Rahmen (12), einem sich in Querrichtung erstreckenden und mit einem vorderen Bereich des Rahmens (12) verbundenen Träger (42), mehreren entlang des Trägers (42) beabstandet angeordneten Furchenöffnern (40) für Dünger zum Ausbringen von Material in den Boden, wobei der Träger (42) schwenkbar mit dem Rahmen (12) verbunden ist und Mittel zum Verschwenken des Trägers (42) vorgesehen sind, um die Arbeitstiefe der Furchenöffner (40) für Dünger zu verändern, mehreren am Rahmen (12) rückwärtig zu den Furchenöffnern (40) für Dünger beabstandet montierten Furchenöffnern (44) für Saatgut, um hinter den Furchenöffnern (40) für Dünger in den Boden einzugreifen, einer Hebevorrichtung (22, 24, 26, 28, 30) zum Heben und Senken des Rahmens (12) relativ zum Boden, um die Arbeitstiefe der Furchenöffner (44) für Saatgut zu verändern, **dadurch gekennzeichnet, dass** eine Lagerhalterung (94) und ein Lagerblock (100) zur schwenkbaren Montierung des Schwenkträgers (42) an den Rahmen (12) vorgesehen sind, wobei der Lagerblock (100) mit der Lagerhalterung (94) verbunden und die Lagerhalterung (94) vertikal einstellbar ist, um eine auswählbare Montierung der Schwenkwelle (42) an einer von mehreren vertikal beabstandeten Positionen und damit eine Veränderung des Arbeitstiefenbereichs der Furchenöffner (40) für Dünger zu ermöglichen.

2. Landwirtschaftliches Gerät nach Anspruch 1, **dadurch gekennzeichnet, dass** eine Halterungskonstruktion (120) vorgesehen ist, die zwischen dem Rahmen (12) und dem Schwenkträger (42) angeordnet ist und eine vertikale Verstellung des Schwenkträgers (42) erleichtert.

3. Landwirtschaftliches Gerät nach Anspruch 2, **dadurch gekennzeichnet, dass** die Halterungskonstruktion (120) ein senkrecht ausgerichtetes Schraubenteil (122) umfasst.

4. Landwirtschaftliches Gerät nach einem der vorhergehenden Ansprüche, **dadurch gekennzeichnet, dass** die Mittel zum Verschwenken des Schwenkträgers (42) einen Motor (60) umfassen, welcher mit der Halterungskonstruktion (120) derart verbunden ist, dass er sich zusammen mit dem Schwenkträger (42) vertikal bewegt.

5. Landwirtschaftliches Gerät nach einem der vorhergehenden Ansprüche, **dadurch gekennzeichnet, dass** erste und zweite nachlaufende Rahmenteile (12a, 12b, 12c) vorgesehen sind, die rückwärtig zu dem vorderen Bereich des Rahmens (12) angeordnet sind, wobei die am Rahmen (12) montierten Furchenöffner (44) für Saatgut scharförmige, hackenartige Furchenöffner (44b) umfassen, die mit den nachlaufenden Rahmenteilen (12a, 12b, 12c) verbunden sind und wobei die Furchenöffner (40) für Dünger scheibenförmige Furchenöffner umfassen, die Schwenkarme (50) aufweisen, welche mit dem Schwenkträger (42) verbunden sind.

6. Landwirtschaftliches Gerät nach Anspruch 1, **dadurch gekennzeichnet, dass** Mittel zum vertikalen Verstellen des Schwenkträgers (42) relativ zum Rahmen (12) vorgesehen sind.

7. Landwirtschaftliches Gerät nach Anspruch 6, **dadurch gekennzeichnet, dass** die Mittel zum vertikalen Verstellen des Schwenkträgers (42) eine vertikal einstellbare Lagerhalterung (94) umfassen.

8. Landwirtschaftliches Gerät nach Anspruch 7, **dadurch gekennzeichnet, dass** die Mittel zum Verschwenken des Schwenkträgers (42) einen Motor (60) umfassen, welcher mit der Lagerhalterung (94) verbunden ist.

9. Landwirtschaftliches Gerät nach einem der Ansprüche 6 bis 8, **dadurch gekennzeichnet, dass** die Mittel zum vertikalen Verstellen des Schwenkträgers (42) ein Schraubgewindeteil (122) umfassen welches zwischen dem Rahmen (12) und der Lagerhalterung (94) angeordnet ist.

10. Landwirtschaftliches Gerät nach einem der Ansprüche 4 bis 5 oder 8 bis 9, **dadurch gekennzeichnet, dass** der Motor (60) als Hydraulikzylinder ausgebildet ist.

11. Landwirtschaftliches Gerät nach einem der Ansprüche 4 bis 5 oder 8 bis 10, dass die Lagehalterung (94) eine Haltekonstruktion (64, 132) für den Motor aufweist.

12. Landwirtschaftliches Gerät nach Anspruch 10, **dadurch gekennzeichnet, dass** der Hydraulikzylinder mit einem einstellbaren Druckregler (140) verbunden ist.

## Claims

1. Agricultural implement comprising a frame (12), a bracket (42) extending in the transverse direction and connected to a front region of the frame (12), a plurality of furrow openers (40) for fertilizer, disposed at intervals along the bracket (42), for applying material into the ground, the bracket (42) being pivotably connected to the frame (12) and means being provided to pivot the bracket (42) so as to alter the working depth of the furrow openers (40) for fertilizer, a plurality of furrow openers (44) for seed, mounted at intervals to the frame (12) to the rear of the furrow openers (40) for fertilizer so as to engage in the ground behind the furrow openers (40) for fertilizer, a lifting device (22, 24, 26, 28, 30) for raising and lowering the frame (12) relative to the ground so as to alter the working depth of the furrow openers (44) for seed, **characterized in that** a bearing mount (94) and a bearing block (100) are provided for the pivotable mounting of the swivel bracket (42) on the frame (12), the bearing block (100) being connected to the bearing mount (94) and the bearing mount (94) being vertically adjustable so as to enable a selectable mounting of the swivel shaft (42) at one of a plurality of vertically spaced positions and hence an alteration of the working depth range of the furrow openers (40) for fertilizer.

2. Agricultural implement according to Claim 1, **characterized in that** a mount construction (120) is provided, which is disposed between the frame (12) and the swivel bracket (42) and facilitates a vertical adjustment of the swivel bracket (42).

3. Agricultural implement according to Claim 2, **characterized in that** the mount construction (120) comprises a vertically aligned screw part (122).

4. Agricultural implement according to one of the preceding claims, **characterized in that** the means for pivoting the swivel bracket (42) comprise a motor (60), which is connected to the mount construction (120) such that the said motor moves vertically together with the swivel bracket (42).

5. Agricultural implement according to one of the preceding claims, **characterized in that** first and second follow-on frame parts (12a, 12b, 12c) are provided, which are disposed to the rear of the front region of the frame (12), the furrow openers (44) for seed, mounted on the frame (12), comprising share-shaped, hoe-like furrow openers (44b), which are connected to the follow-on frame parts (12a, 12b, 12c), and the furrow openers (40) for fertilizer comprising disc-shaped furrow openers, which have swivel arms (50) connected to the swivel bracket (42).

6. Agricultural implement according to Claim 1, **characterized in that** means are provided for the vertical adjustment of the swivel bracket (42) relative to the frame (12).

7. Agricultural implement according to Claim 6, **characterized in that** the means for the vertical adjustment of the swivel bracket (42) comprise a vertically adjustable bearing mount (94).

8. Agricultural implement according to Claim 7, **characterized in that** the means for the pivoting of the swivel bracket (42) comprise a motor (60), which is connected to the bearing mount (94).

9. Agricultural implement according to one of Claims 6 to 8, **characterized in that** the means for the vertical adjustment of the swivel bracket (42) comprise a screw thread part (122), which is disposed between the frame (12) and the bearing mount (94).

10. Agricultural implement according to one of Claims 4 to 5 or 8 to 9, **characterized in that** the motor (60) is configured as a hydraulic cylinder.

11. Agricultural implement according to one of Claims 4 to 5 or 8 to 10, **characterized in that** the bearing mount (94) has a holding construction (64, 132) for the motor.

12. Agricultural implement according to Claim 10, **characterized in that** the hydraulic cylinder is provided with an adjustable pressure governor (140).

## Revendications

1. Outil agricole comportant un châssis (12), un support (42) orienté dans le sens transversal et relié à une partie avant du châssis (12), plusieurs ouvreurs de sillons (40) pour engrais, agencés à distance les uns des autres le long du support (42) pour déposer des engrais dans le sol, le support (42) étant relié de manière pivotante avec le châssis (12) et des moyens destinés à faire pivoter le support (42) sont prévus pour modifier la profondeur de travail des ouvreurs de sillons (40) pour engrais, plusieurs ouvreurs de sillons (44) pour semences, montés à l'arrière sur le châssis (12) à distance des ouvreurs de sillons (40) pour engrais, afin d'entrer en prise avec le sol en aval des ouvreurs de sillons (40) pour engrais, un dispositif de levage (22, 24, 26, 28, 30) pour relever et abaisser le châssis (12) par rapport au sol afin de modifier la profondeur de travail des ouvreurs de sillons (44) pour semences, **caractérisé en ce qu'**une fixation de palier (94) et un support de palier (100) sont prévus pour le montage pivotant du support pivotant (42) contre le châssis (12), le support de palier (100) étant relié à la fixation de palier (94) et la fixation de palier (94) étant réglable dans le sens vertical, pour permettre un montage au choix de l'arbre pivotant (42) dans une position parmi plusieurs positions à distance les unes des autres dans le sens vertical et donc pour permettre une variation de la profondeur de travail des ouvreurs de sillons (40) pour engrais.

2. Outil agricole selon la revendication 1, **caractérisé en ce qu'**il est prévu une structure de fixation (120), qui est agencée entre le châssis (12) et le support pivotant (42) et facilite un réglage vertical du support pivotant (42).

3. Outil agricole selon la revendication 2, **caractérisé en ce que** la structure de fixation (120) comporte un élément fileté (122) orienté verticalement.

4. Outil agricole selon l'une quelconque des revendications précédentes, **caractérisé en ce que** les moyens pour le pivotement du support pivotant (42) comportent un moteur (60), qui est relié à la structure de fixation (120) de telle sorte qu'il peut se déplacer verticalement conjointement avec le support pivotant (42).

5. Outil agricole selon l'une quelconque des revendications précédentes, **caractérisé en ce qu'**il est prévu des premières et deuxièmes parties arrière de châssis (12a, 12b, 12c), qui sont agencées à l'arrière par rapport à la partie avant du châssis (12), les ouvreurs de sillons (44) pour semences, montés contre le châssis (12), comportant des ouvreurs de sillons (44b) en forme de soc, en forme de houe, qui sont reliés aux parties arrière de châssis (12a, 12b, 12c), et les ouvreurs de sillons (40) pour engrais comportant des ouvreurs de sillons en forme de disque, qui sont munis de bras pivotants (50), qui sont assemblés au support pivotant (42).

6. Outil agricole selon la revendication 1, **caractérisé en ce qu'**il est prévu des moyens pour le réglage vertical du support pivotant (42) par rapport au châssis (12).

7. Outil agricole selon la revendication 6, **caractérisé en ce que** les moyens de réglage vertical du support pivotant (42) comportent une fixation de palier (94) réglable dans le sens vertical.

8. Outil agricole selon la revendication 7, **caractérisé en ce que** les moyens de réglage vertical du support pivotant (42) comportent un moteur (60) qui est relié à la fixation de palier (94).

9. Outil agricole selon l'une quelconque des revendications 6 à 8, **caractérisé en ce que** les moyens de réglage vertical du support pivotant (42) comportent un élément fileté (122) qui est agencé entre le châssis (12) et la fixation de palier (94).

10. Outil agricole selon l'une quelconque des revendications 4 à 5 ou 8 à 9, **caractérisé en ce que** le moteur (60) est réalisé sous la forme d'un vérin hydraulique.

11. Outil agricole selon l'une quelconque des revendications 4 à 5 ou 8 à 10, **caractérisé en ce que** la fixation de palier (94) comporte une structure de fixation (64, 132) pour le moteur.

12. Outil agricole selon la revendication 10, **caractérisé en ce que** le vérin hydraulique est relié à un régulateur de pression (140) réglable.
